# EUROPEAN PATENT SPECIFICATION

(11) **EP 3 244 283 B1**
(45) Date of publication and mention of the grant of the patent: **27.06.2018**
(21) Application number: 17178044.8
(22) Date of filing: 15.05.2014
(51) Int. Cl.: G06F 1/16, B60R 11/02

(54) **ADJUSTABLE PORTABLE DEVICE HOLDER**
EINSTELLBARE HALTERUNG FÜR TRAGBARE VORRICHTUNG
MONTURE RÉGLABLE POUR DISPOSITIF PORTATIF

(30) Priority: 17.05.2013 US 201313897062
(43) Date of publication of application: 15.11.2017
(62) Divisional of application: 14798238.3
(73) Proprietor: Kenu Inc., San Francisco, CA 94110 (US)
(72) Inventor: MINN, Kenneth, Y, San Francisco, CA 94110 (US); YAO, David, E, San Francisco, CA 94110 (US)
(74) Representative: Breesé, Pierre

(56) References cited:
- EP-A1- 1 902 736
- CN-U- 202 907 016
- DE-U1-202004 007 340
- US-A- 5 305 381

## Description

### FIELD OF TECHNOLOGY

The present application is directed to adjustable portable device holder systems and methods.

### BACKGROUND

Various electronic and other device mounts are known in the art. Available device mounts have many drawbacks. For instance, suction cup mounts are typically large, bulky and require a large mounting surface such as a windshield. Device mounts often fail to properly and consistently attach to the mounting surface. Some device mounting solutions require adhesive to secure the mount to a vehicle dash, wearing off over time and leaving an undesirable residue on the mounting surface. Current device mounts also fail to effectively accommodate a broad range of devices or mounting surfaces. Document US 5305381 is considered to be the closest prior art and discloses an adjustable portable device holder according to the preamble of claim 1.

Due to the deficiencies in the currently available device mounts, people choose not use electronic device mounts and often violate state and provincial hands-free driving laws. Other state and provincial laws prohibit objects mounted to the windshield to prevent obstruction of the driver's view.

This specification is directed to improved portable device holder systems and methods for manufacturing the same.

### SUMMARY

Adjustable portable device holder systems and methods for manufacturing the same are herein disclosed. According to the invention an adjustable portable device holder includes an adjustable clamping element and a rotatable mounting element attached to the adjustable clamping element for removably securing a portable device to the adjustable portable device holder. The adjustable clamping element is capable of being biased into an activated state and unbiased into a deactivated state to secure one of a plurality of different size portable devices to the adjustable portable device holder. The rotatable mounting element, attached to the adjustable clamping element, includes a plurality of mounting arms each spaced a specified distance apart from one another and extending at a specified angle from a bottom surface of the rotatable mounting element. Each pair of the plurality of mounting arms forms a mounting slot therein between. The rotatable mounting element is capable of being rotated to position a first mounting slot in a vertical, horizontal or diagonal orientation and a second mounting slot in a vertical, horizontal or diagonal orientation to engage a first mounting surface in a vertical, horizontal or diagonal orientation or a second mounting surface in a vertical, horizontal or diagonal orientation.

A process for manufacturing an exemplary adjustable portable device holder is disclosed. The process includes providing an adjustable clamping element capable of being biased into an activated state and unbiased into a deactivated state to secure one of a plurality of portable device sizes to the adjustable portable device holder. The process also includes providing a rotatable mounting element comprising a plurality of mounting arms each spaced a specified distance apart from one another and extending at a specified angle from a bottom surface of the rotatable mounting element. Each pair of the plurality of mounting arms form a mounting slot therein between. The rotatable mounting element is capable of being rotated to position a first mounting slot in a vertical, horizontal or diagonal orientation and a second mounting slot in a vertical, horizontal or diagonal orientation to engage a first mounting surface in a vertical, horizontal or diagonal orientation or a second mounting surface in a vertical, horizontal or diagonal orientation. The process also includes attaching the rotatable mounting element to the adjustable clamping element.

The foregoing and other objects, features and advantages of the present disclosure will become more readily apparent from the following detailed description of exemplary embodiments as disclosed herein.

### BRIEF DESCRIPTION OF THE DRAWINGS

Embodiments of the present application are described, by way of example only, with reference to the attached Figures, wherein:
FIG. 1 illustrates an adjustable portable device holder in a retracted setting according to one embodiment;
FIG. 2 illustrates an adjustable portable device holder in an expanded setting according to one embodiment;
FIG. 3 illustrates an adjustable portable device holder in a retracted setting according to one embodiment;
FIGS. 4A and 4B illustrate an adjustable portable device holder attached to a device and a mounting surface according to one embodiment; and
FIG. 5 illustrates a flow chart of a process for manufacturing an exemplary adjustable portable device holder according to one embodiment.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the example embodiments described herein. However, it will be understood by those of ordinary skill in the art that the example embodiments described herein may be practiced without these specific details. In other instances, methods, procedures and components have not been described in detail so as not to obscure the embodiments described herein.

The adjustable portable device holders described in this specification can include an adjustable clamping element attached to a rotatable mounting element. The adjustable portable device holder can be used to attach and mount a portable device to a mounting surface. The portable device can be any device that fits into the adjustable clamping element including, but not limited to a smartphone or other phone, a tablet, an e-reader, a powerbank, a speaker, a multimedia player, a flashlight or other light, a television or other display, a laser or radar detector, an air freshener, a fan, a beverage or other device that can fit into the adjustable clamping element. The adjustable portable device holder can be mounted to various mounting surfaces including, but not limited to an automobile air conditioner vent blade, an automobile dashboard, an automobile sun visor, a credit card, the brim of a hat, a counter, a tripod, a bicycle, a backpack, a utensil, a ledge or other surface.

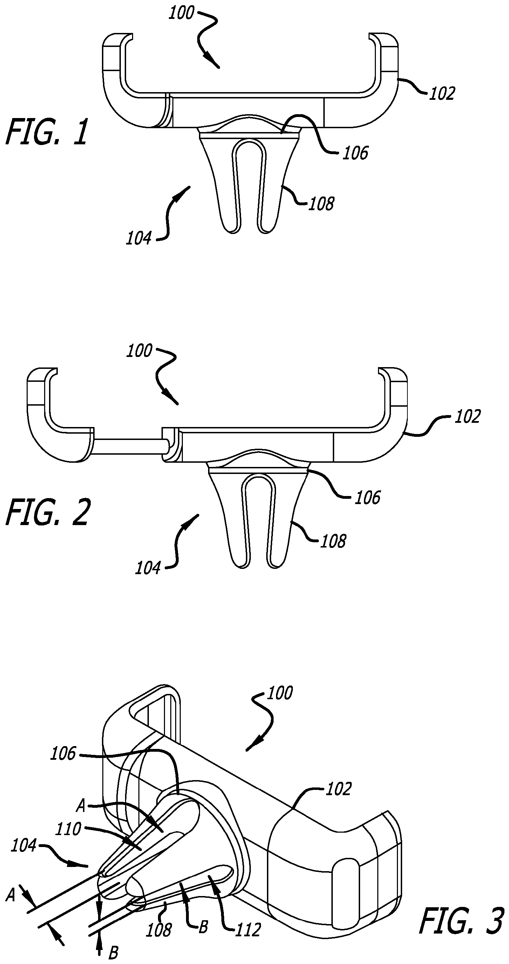

FIG. 1 illustrates an adjustable portable device holder 100 in a retracted setting according to one embodiment. The adjustable portable device holder 100 includes an adjustable clamping element 102 attached to a rotatable mounting element 104.

FIG. 2 illustrates an adjustable portable device holder 100 in an expanded setting according to one embodiment. The adjustable portable device holder 100 includes an adjustable clamping element 102 attached to a rotatable mounting element 104.

FIG. 3 illustrates an adjustable portable device holder 100 in a retracted setting according to one embodiment. The adjustable portable device holder 100 includes an adjustable clamping element 102 attached to a rotatable mounting element 104.

The adjustable clamping element 102 illustrated in FIGS. 1-3 can be expanded and retracted to attach devices of different sizes to the adjustable portable device holder 100. A force can be applied to expand or bias the adjustable clamping element 102 into an activated state (shown in FIG. 2) and the force can be released to retract the adjustable clamping element 102 into a deactivated state (shown in FIGS. 1 and 3). An elastic retracting or biasing element (not shown), such as a compression or torsion spring can be incorporated into the adjustable clamping element 102. The compression or torsion spring facilitates the expansion and retraction of the adjustable clamping element 102 upon applying or releasing a force on a surface of the adjustable clamping element 102.

The adjustable clamping element 102 can also include a gripping material on a surface of the adjustable clamping element 102 to provide a better grip, a better viewing angle or better attachment to a device secured within the adjustable clamping element 102. The gripping material can be applied to a portion of the adjustable clamping element 102 or the entire adjustable clamping element 102 can be made of the gripping material. The gripping material can be any material that increases the adhesion, grip or coefficient of friction between the gripping surface of the adjustable clamping element 102 and a surface of a device secured within the adjustable clamping element 102. The gripping material can include, but is not limited to rubber, polymeric material or other plastic, metal, alloy, fabric, composite material or other material capable of increasing the adhesion, grip or coefficient of friction between the gripping surface of the adjustable clamping element 102 and a surface of a device secured within the adjustable clamping element 102. The gripping material and gripping surface can be textured and composed of the same or different material.

The rotatable mounting element 104 illustrated in FIGS. 1-3 can be directly or indirectly attached to the adjustable clamping element 102. The adjustable clamping element 102 and the rotatable mounting element 104 can be one integral part or component parts that are attached together by any attaching means that allows the rotatable mounting element 104 to rotate. The rotatable mounting element 104 includes a base plate 106 and a plurality of mounting arms 108 extending from the base plate 106. The base plate 106 and the plurality of mounting arms 108 can be one integral part or component parts that are attached together by any attaching means.

Referring to FIG. 3, the base plate 106 can be a cylindrically shaped disc or other element that is capable of being rotated 360 degrees clockwise or counter-clockwise. The base plate 106 provides a rotating platform from which mounting arms 108 extend. The mounting arms 108 are spaced a specified distance apart relative to one another on the base plate 106. The mounting arms 108 also extend from the base plate 106 at a specified angle relative to the base plate 106. The size of the mounting arms 108, the distance between the mounting arms 108 and the angle at which the mounting arms 108 extend from the base plate 106 establish and define mounting slots 110, 112 between pairs of mounting arms 108. The rotatable mounting element 104 can include any number of mounting arms 108 and any number of mounting slots 110, 112.

The mounting arms 108 can also include a gripping material on a surface of the mounting arms 108 to provide a better grip, a better viewing angle or better attachment to a mounting surface secured between the mounting arms 108. The gripping material can be applied to a portion of mounting arms 108 or the entirety of the mounting arms 108 can be made of the gripping material. The gripping material can be any material that increases the adhesion, grip or coefficient of friction between the gripping surface of mounting arms 108 and a mounting surface secured between the mounting arms 108. The gripping material can include, but is not limited to rubber, polymeric material or other plastic, metal, alloy, fabric, composite material or other material capable of increasing the adhesion, grip or coefficient of friction between the gripping surface of mounting arms 108 and a mounting surface secured between the mounting arms 108. The gripping material and gripping surface can be textured and composed of the same or different material.

In one exemplary embodiment, the rotatable mounting element 104 includes four mounting arms and four mounting slots. In another exemplary embodiment, the rotating mounting element 104 includes 6 mounting arms and six mounting slots.

The mounting arms 108 and mounting slots 110, 112, can engage a mounting surface (not shown) to mount the adjustable portable device holder 100. The adjustable portable device holder 100 is mounted to a mounting surface by positioning, press fitting or wedging a mounting surface within one or more mounting slots 110, 112 to engage two or more mounting arms 108. The adjustable portable device holder 100 can be mounted to various mounting surfaces including, but not limited to an automobile air conditioner vent blade, an automobile dashboard, an automobile sun visor, a credit card, the brim of a hat, a counter, a tripod, a bicycle, a backpack, a utensil, a ledge or other surface that can be positioned, press fit or wedged within one or more mounting slots 110, 112 between two or more mounting arms 108.

The rotatable mounting element 104 can include any number of mounting arms 108 forming and defining any number of mounting slots 110, 112. The size of the mounting slots 110, 112 can be controlled by adjusting the size of the mounting arms 108, the distance between the mounting arms 108 and the angle at which the mounting arms 108 extend from the base plate 106. The rotatable mounting element 104 can include one or more different size mounting slots 110, 112 to accommodate different size mounting surfaces. For instance in FIG. 3, one mounting slot 110 having clearance *A* can be larger than another mounting slot 112 having clearance *B*. One or more of the mounting slots 110 formed on the rotatable mounting element 104 can accommodate a larger mounting surface than other mounting slots 112 formed on the rotatable mounting element 104.

The rotatable mounting element 104 can be rotated to position the mounting arms 108 and mounting slots 110, 112 in a horizontal plane, vertical plane, diagonal plane, circular plane, concave plane, convex plane or any plane between vertical and horizontal planes relative to the force of gravity. The mounting arms 108 and mounting slots 110, 112 can be positioned to engage a mounting surface in any engagement plane within the 360 degree rotation of the mounting element 104. The rotatable mounting element 104 can be rotated to position a relatively larger mounting slot 110 with clearance *A* in a horizontal, vertical, diagonal, circular, concave or convex plane to engage a relatively larger mounting surface in a horizontal, vertical, diagonal, circular, concave or convex engagement plane. The rotatable mounting element 104 can also be rotated to position a relatively smaller mounting slot 112 with clearance *B* in a horizontal, vertical, diagonal, circular, concave or convex plane to engage a relatively smaller mounting surface in a horizontal, vertical, diagonal, circular, concave or convex engagement plane.

The rotatable mounting element is capable of being rotated 360 degrees clockwise or counter-clockwise to engage different size mounting surfaces in a horizontal plane, vertical plane, diagonal plane, circular plane, concave plane, convex plane or any plane between vertical and horizontal planes. A device attached to the adjustable portable device holder 100 via the adjustable clamping element 102 can also be rotated 360 degrees clockwise or counter-clockwise while it is attached to the adjustable portable device holder 100 by rotating the rotatable mounting element 104.

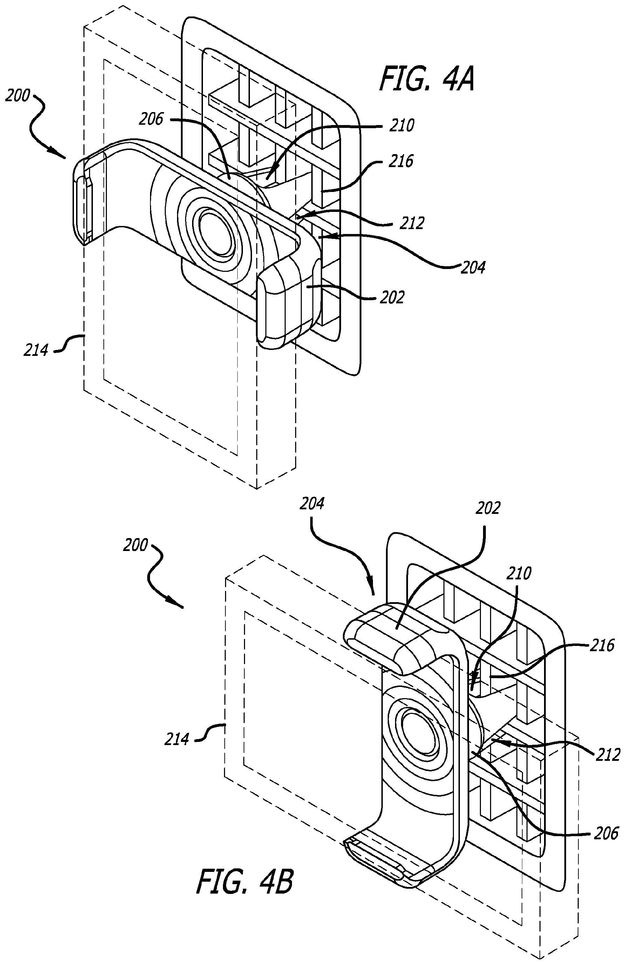

FIGS. 4A and 4B illustrate an adjustable portable device holder 200 attached to a device 214 and a mounting surface 216 according to one embodiment. The device 214 is a smart phone and the mounting surface 216 is an automobile air conditioner vent blade.

Other portable devices can also fit into the adjustable clamping element including, but not limited to a tablet, an e-reader, a powerbank, a speaker, a multimedia player, a flashlight or other light, a television or other display, a laser or radar detector, an air freshener, a fan, a beverage or other device. The adjustable portable device holder 200 can also be mounted to other mounting surfaces including, but not limited to an automobile dashboard, an automobile sun visor, a credit card, the brim of a hat, a counter, a tripod, a bicycle, a backpack, a utensil, a ledge or other surface.

The adjustable portable device holder 200 includes an adjustable clamping element 202 attached to a rotatable mounting element 204. The adjustable clamping element 202 can be expanded and retracted to attach different size smartphones to the adjustable portable device holder 200. A force can be applied to expand or bias the adjustable clamping element 202 into an activated state and the force can be released to retract the adjustable clamping element 202 into a deactivated state to clamp around the smartphone 214. An elastic retracting or biasing element (not shown), such as a compression or torsion spring can be incorporated into the adjustable clamping element 202 to facilitate the expansion and retraction of the adjustable clamping element 202 and to accommodate different size smartphones.

The adjustable clamping element 202 can also include a gripping material on a surface of the adjustable clamping element 202 to provide a better grip, a better viewing angle or better attachment to the smart phone 214 or other device secured within the adjustable clamping element 202. The gripping material can be applied to a portion of the adjustable clamping element 202 or the entire adjustable clamping element 202 can be made of the gripping material. The gripping material can be any material that increases the adhesion, grip or coefficient of friction between the gripping surface of the adjustable clamping element 202 and a surface of a device secured within the adjustable clamping element 202. The gripping material can include, but is not limited to rubber, polymeric material or other plastic, metal, alloy, fabric, composite material or other material capable of increasing the adhesion, grip or coefficient of friction between the gripping surface of the adjustable clamping element 202 and a surface of a device secured within the adjustable clamping element 202. The gripping material and gripping surface can be textured and composed of the same or different material.

The rotatable mounting element 204 can be directly or indirectly attached to the adjustable clamping element 202. The adjustable clamping element 202 and the rotatable mounting element 204 can be one integral part or component parts that are attached together by any attaching means, such as a screw, ratchet, pin, rod or friction or other device that allows the rotatable mounting element 204 to rotate. The rotatable mounting element 204 includes a base plate 206 and a plurality of mounting arms 208 extending from the base plate 206. The base plate 206 and the plurality of mounting arms 208 can be one integral part or component parts that are attached together by any attaching means.

The base plate 206 can be a cylindrically shaped disc or other element that is capable of being rotated 360 degrees clockwise or counter-clockwise. The base plate 206 provides a rotating platform from which the mounting arms 208 extend. The mounting arms 208 are spaced a specified distance apart relative to one another on the base plate 206. The mounting arms 208 also extend from the base plate 206 at a specified angle relative to the base plate 206. The size of the mounting arms 208, the distance between the mounting arms 208 and the angle at which the mounting arms 208 extend from the base plate 206 establish and define mounting slots 210, 212 between pairs of mounting arms 208. The rotatable mounting element 204 includes four mounting arms 208 and four mounting slots 210, 212.

The mounting arms 208 and mounting slots 210, 212, can engage and attach to an air conditioner vent blade 216 to mount the adjustable portable device holder 200. The adjustable portable device holder 200 is mounted to the air conditioner vent blade 216 by positioning, press fitting or wedging a surface of the air conditioner vent blade 216 within one or more mounting slots 210, 212 to engage two or more mounting arms 208.

The mounting arms 208 can also include a gripping material on a surface of the mounting arms 208 to provide a better grip, a better viewing angle or better attachment to the air conditioner vent blade 216 secured between mounting arms 208. The gripping material can be applied to a portion of mounting arms 208 or the entirety of the mounting arms 208 can be made of the gripping material. The gripping material can be any material that increases the adhesion, grip or coefficient of friction between the gripping surface of mounting arms 208 and an air conditioner vent blade 216 secured between the mounting arms 208. The gripping material can include, but is not limited to rubber, polymeric material or other plastic, metal, alloy, fabric, composite material or other material capable of increasing the adhesion, grip or coefficient of friction between the gripping surface of mounting arms 208 and the air conditioner vent blade 216 secured between the mounting arms 208. The gripping material can be and gripping surface and composed of the same or different material.

The rotatable mounting element 204 includes two different sizes of mounting slots 210, 212 to accommodate different size air conditioner vent blades 216 or other mounting surfaces. Two mounting slots 210 having clearance *A* are larger than the other two mounting slots 212 having clearance *B*.

The rotatable mounting element 204 can be rotated to position the mounting arms 208 and mounting slots 210, 212 in a horizontal, vertical, diagonal, circular, concave, convex or any plane between vertical and horizontal planes to engage air conditioner vent blades 216 oriented in a horizontal, vertical, diagonal, circular, concave, convex or any plane between vertical and horizontal planes. The mounting arms 208 and mounting slots 210, 212 can be positioned to attach to an air conditioner vent blade in any engagement plane within the 360 degree rotation of the mounting element 204. The rotatable mounting element 204 can be rotated to position the larger mounting slots 210 with clearance *A* in a horizontal, vertical, diagonal, circular, concave, convex or any plane between vertical and horizontal planes to engage or attach to larger air conditioner vent blades 216 oriented in a horizontal, vertical, diagonal, circular, concave, convex or any plane between vertical and horizontal planes. The rotatable mounting element 204 can also be rotated to position the smaller mounting slots 212 with clearance *B* in a horizontal, vertical, diagonal, circular, concave, convex or any plane between vertical and horizontal planes to engage or attach to smaller air conditioner vent blades 216 oriented in a horizontal, vertical, diagonal, circular, concave, convex or any plane between vertical and horizontal planes.

The rotatable mounting element 204 is capable of being rotated 360 degrees clockwise or counter-clockwise to engage different size mounting surfaces in a horizontal, vertical, diagonal, circular, concave, convex or any plane between vertical and horizontal planes relative to the force of gravity. The smart phone 214 attached to the adjustable portable device holder 200 can be rotated into a portrait orientation (shown in FIG. 4A) and a landscape orientation (shown in FIG. 4B) by rotating the rotatable mounting element 204. The smart phone 214 attached to the adjustable portable device holder 200 can be rotated 360 degrees clockwise or counter-clockwise while it is attached to the adjustable portable device holder 200 by rotating the smart phone 214 and adjustable clamping element 202, while the rotatable mounting element 204 is secured to a mounting surface.

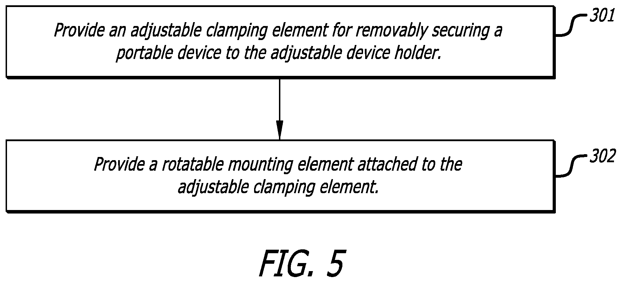

FIG. 5 illustrates a flow chart of a process for manufacturing an exemplary adjustable portable device holder according to one embodiment. At step 301, the process includes providing an adjustable clamping element for removably securing a portable device to the adjustable portable device holder. The adjustable clamping element is capable of being biased into an activated state and unbiased into a deactivated state to secure one of a plurality of different size portable device to the adjustable portable device holder.

For example, to manufacture the adjustable portable device holder, two stainless steel rods can be inserted into an expandable arm cavity of a double injection mold. PC/ABS is injected into the cavities of the mold to hold the rods in place and to produce an expandable arm, main body and cover of an adjustable clamping element. The mold is then rotated and injected with TPE to form side grips of the expandable arm and body of the adjustable clamping element. A stainless steel spring is inserted over each rod and held in place by a stainless steel screw affixed to the end of the rods. Grease is added to the lower portion of the spring and rods (near the screw head). The expandable arm is inserted into the body and the springs are lowered and held in place within the body of the adjustable clamping element. The cover is the slid on to the body to hold the adjustable arm in place.

The adjustable clamping element or a surface thereof can also be formed from rubber, polymeric material or other plastic, metal, alloy, or composite material that is rigid, semi-rigid or textured.

At step 302, a rotatable mounting element is provided, which can be attached to the adjustable clamping element via screw, ratchet, pin, rod or friction or other attachment means. The rotatable mounting element includes a plurality of mounting arms each spaced a specified distance apart from one another and extending at a specified angle from a bottom surface of the rotatable mounting element. Each pair of the plurality of mounting arms form a mounting slot therein between. The rotatable mounting element is capable of being rotated to position a first mounting slot in a vertical, horizontal or diagonal orientation and a second mounting slot in a vertical, horizontal or diagonal orientation to engage a first mounting surface in a vertical, horizontal or diagonal orientation or a second mounting surface in a vertical, horizontal or diagonal orientation.

For example, and a rotatable mounting element can be formed in whole or part from stainless metal or other metal, alloy or plastic sheet stamped to form a clip or base plate with four arms extending from the base plate, spaced a specified distance apart and bent to a desired angle. If metal or other heat treatable material, the rotatable mounting element can be heat treated to form a rigid structure. The rotatable mounting element or a surface thereof can also be formed from rubber, polymeric material or other plastic, metal, alloy, or composite material that is rigid, semi-rigid or textured.

A zinc-alloy nut or other alloy or material can be formed using a die-cast mold to attach the rotatable mounting element to the adjustable clamping element. Glue is added to the cavity of the nut. The rotatable mounting element is affixed to the main body of the adjustable clamping element via the nut and a second stainless screw. A force gage is used to monitor the rotational force of the rotatable mounting element and the rotatable mounting element is adjusted if screw is too tight or loose.

TPE is injected into a mold to create a skirt and four socks. The skirt and four socks can also be formed from rubber, polymeric material or other plastic, metal, alloy, or composite material that is rigid, semi-rigid or textured. The skirt is assembled over the mounting arms of the rotatable mounting element. Glue is added to each mounting arm of the rotatable mounting element. A sock is inserted over each mounting arm, which holds the skirt in place.

Example embodiments have been described hereinabove regarding adjustable portable device holder systems and methods. Various modifications to and departures from the disclosed example embodiments will occur to those having ordinary skill in the art.

## Claims

1. An adjustable portable device holder (100, 200) comprising:
an adjustable clamping element (102, 202) that can be expanded and retracted to secure portable electronic devices of different sizes to the adjustable portable device holder (100, 200);
the adjustable clamping element including a compression or torsion spring that facilitates expansion and retraction of the adjustable clamping element (102, 202) upon applying or releasing a force on a surface of the adjustable clamping element (102, 202);
a rotatable mounting element (104, 204) attached to the adjustable clamping element (102, 202), **characterized in that**; the rotatable mounting element (104, 204) including a base plate (106, 206) and a plurality of mounting arms (108, 208) extending from the base plate (106, 206);
the base plate (106, 206) providing a rotating platform from which the mounting arms (106, 208) extend;
the mounting arms (108, 208) spaced a distance apart relative to one another and extending from the base plate (106, 206) at an angle relative to the base plate (106, 206), and defining a mounting slot (110, 112, 210, 212) between the mounting arms (108, 208);
the mounting slot (110, 112, 210, 212) between the mounting arms (108, 208) configured to engage and attach to an automobile air conditioner vent blade to mount the adjustable portable device holder (100, 200); and
the mounting arms of the rotatable mounting element (104, 204) including a gripping material on a gripping surface of the mounting arms to increase an adhesion, grip or coefficient of friction between the gripping surface of mounting arms (108, 208) and an automobile air conditioner vent blade secured within the mounting slot (110, 112, 210, 212) between the mounting arms (108, 208).

2. The adjustable portable device holder (100, 200) claim 1, wherein the rotatable mounting element (104, 204) formed in whole or part from a metal, alloy or plastic sheet stamped to form the base plate (106, 206) with arms extending from the base plate, spaced a distance apart from one another and bent at an angle relative to the base plate to form the mounting arms (108, 208); and

3. The adjustable portable device holder (100, 200) of claim 1 or 2, wherein the base plate (106, 206) comprises a cylindrically shaped disc or other element that is capable of being rotated clockwise or counter-clockwise; and further comprising a screw, ratchet, pin or rod that attaches the rotatable mounting element (104, 204) to the adjustable clamping element (102, 202) and that allows the rotatable mounting element (104, 204) to rotate.

4. The adjustable portable device holder (100, 200) of claim 1 or 2, wherein injection molded socks are inserted over the mounting arms (108, 208) of the rotatable mounting element (104, 204).

5. The adjustable portable device holder (100, 200) of claim 1 or 2, wherein an injection molded skirt is assembled over the mounting arms (108, 208) of the rotatable mounting element (104, 204), and injection molded socks are inserted over the mounting arms and hold the skirt in place.

6. The adjustable portable device holder (100, 200) of claim 1 or 2, wherein the rotatable mounting element (104, 204) enables a portable electronic device that is secured within the adjustable clamping element (102, 202) to be rotated clockwise or counter-clockwise into a portrait orientation and a landscape orientation while the rotatable mounting element (104, 204) is secured to an automobile air conditioner vent blade.

7. The adjustable portable device holder (100, 200) of claim 1 or 2, wherein the mounting arms (108, 208) define multiple mounting slots (110, 112, 210, 212) including a first mounting slot (110, 210) having first clearance and a second mounting slot (112, 212) having second clearance, wherein the first clearance is larger than the second clearance.

8. The adjustable portable device holder (100, 200) of claim 7, wherein:
the rotatable mounting element (104, 204) can be rotated to position the first mounting slot (110, 210) having the first clearance in a horizontal, vertical, or diagonal plane to secure the first mounting slot (110, 210) to larger automobile air conditioner vent blades oriented in a horizontal, vertical or diagonal plane; and
the rotatable mounting element (104, 204) can be rotated to position the second mounting slot (112, 212) having the second clearance in a horizontal, vertical, or diagonal plane to secure the second mounting slot (112, 212) to smaller automobile air conditioner vent blades oriented in a horizontal, vertical or diagonal plane.

9. The adjustable portable device holder (100, 200) claim 1 or 2, wherein the gripping material comprises a rubber, polymeric material or other plastic, metal, alloy, fabric, composite material that increases the adhesion, grip or coefficient of friction between the gripping surface of mounting arms (108, 208) and an automobile air conditioner vent blade secured between the mounting arms (108, 208).

10. The adjustable portable device holder (100, 200) claim 1 or 2, wherein:
the adjustable clamping element (102, 202) includes a gripping material on a surface of the adjustable clamping element (102, 202) to increase an adhesion, grip or coefficient of friction between the gripping surface of adjustable clamping element and a surface of a portable electronic device secured within the adjustable clamping element (102, 202); and
the gripping material on the surface of the adjustable clamping element (102, 202) comprises a rubber, polymeric material or other plastic, metal, alloy, fabric, composite material that increases the adhesion, grip or coefficient of friction between the gripping surface of mounting arms (108, 208) and an automobile air conditioner vent blade secured between the mounting arms (108, 208).

11. The adjustable portable device holder (100, 200) of claim 1 or 2, wherein:
the base plate (106, 206) of the rotatable mounting element (104, 204) is attached to a main body of the adjustable clamping element (102, 202);
when the adjustable clamping element (102, 202) is completely retracted, a portion of the adjustable clamping element (102, 202) from which a side grip extends is flush with a side portion of the main body; and
when the adjustable clamping element (102, 202) is expanded, the portion of the adjustable clamping element from which the side grip extends is no longer flush with the side portion of the main body.

12. The adjustable portable device holder (100, 200) of claim 11, wherein the portion of the adjustable clamping element from which the side grip extends comprises an expandable arm.

13. The adjustable portable device holder (100, 200) of claim 12, further comprising two rods inserted into the expandable arm.

14. The adjustable portable device holder (100, 200) of claim 13, wherein:
when the adjustable clamping element (102, 202) is completely retracted the rods are not exposed and are thereby not viewable; and
when the adjustable clamping element (102, 202) is expanded there is a gap, between the main body and the adjustable arm of the adjustable clamping element, with the rods exposed and thereby viewable within the gap.

15. The adjustable portable device holder (100, 200) of claim 1, wherein:
the adjustable clamping element (102, 202) is configured to engage only two of four peripherals sides of a portable electronic device that is secured within the adjustable clamping element (102, 202); and
wherein portable electronic devices of different sizes that can be secured within the adjustable clamping element (102, 202) of the adjustable portable device holder (100, 200) comprise different size smartphones.

## Patentansprüche

1. Ein verstellbarer tragbarer Gerätehalter (100, 200), bestehend aus:
einem verstellbaren Spannelement (102, 202), das aus- und einfahrbar ist, um tragbare elektronische Geräte unterschiedlicher Größe am verstellbaren tragbaren Gerätehalter (100, 200) zu befestigen;
dem verstellbaren Spannelement einschließlich einer Druck- oder Torsionsfeder, die das Aus- und Einfahren des verstellbaren Spannelementes (102, 202) bei Aufbringen oder Lösen einer Kraft auf eine Fläche des verstellbaren Spannelementes (102, 202) erleichtert;
einem drehbaren Befestigungselement (104, 204), das an dem verstellbaren Spannelement befestigt ist, (102, 202), **dadurch gekennzeichnet, dass**;
das drehbare Befestigungselement (104, 204) eine Grundplatte (106, 206) umfasst und eine Vielzahl von Befestigungsarmen (108, 208), die von der Grundplatte (106, 206) ausgehen;
die Grundplatte (106, 206) eine drehbare Plattform bietet, von der aus die Befestigungsarme (106, 208) ausgehen;
die Befestigungsarme (108, 208) in einem Abstand zueinander angeordnet sind und von der Grundplatte (106, 206) in einem Winkel relativ zur Grundplatte (106, 206) ausgehen und einen Befestigungsschlitz (110, 112, 210, 212) zwischen den Befestigungsarmen (108, 208) definieren;
der Befestigungsschlitz (110, 112, 210, 212) zwischen den Befestigungsarmen (108, 208) ist so gestaltet, dass er in ein Entlüftungsblatt der Klimaanlage eines Kraftfahrzeugs passt und dort befestigt wird, um den verstellbaren tragbaren Gerätehalter (100, 200) zu montieren; und
die Befestigungsarme des drehbaren Befestigungselements (104, 204) Greifmaterial auf einer Greiffläche der Befestigungsarme aufweisen, um eine Haftung, einen Griff oder einen Reibungskoeffizienten zwischen der Greiffläche der Befestigungsarme (108, 208) und einem Lüftungsflügel der Fahrzeugklimaanlage zu erhöhen, der im Montageschlitz (110, 112, 210, 212) zwischen den Befestigungsarmen (108, 208) befestigt ist.

2. Der verstellbare tragbare Gerätehalter (100, 200) nach Anspruch 1, wobei das drehbare Befestigungselement (104, 204), das ganz oder teilweise aus einem Metall-, Legierungs- oder Kunststoffblech besteht, die Grundplatte (106, 206) bildet, mit Armen, die von der Grundplatte ausgehen, in einem Abstand voneinander angeordnet und in einem Winkel zur Grundplatte gebogen sind, um die Befestigungsarme (108, 208) zu bilden;

3. Der verstellbare tragbare Gerätehalter (100, 200) nach Anspruch 1 oder 2, wobei die Grundplatte (106, 206) eine zylindrisch geformte Scheibe oder ein anderes Element aufweist, das im oder gegen den Uhrzeigersinn gedreht werden kann; und ferner eine Schraube, eine Sperrvorrichtung, einen Stift oder eine Stange aufweist, die das drehbare Befestigungselement (104, 204) am verstellbaren Klemmelement (102, 202) befestigt und das Drehen des drehbaren Befestigungselements (104, 204) ermöglicht.

4. Der verstellbare tragbare Gerätehalter (100, 200) aus Anspruch 1 oder 2, wobei spritzgegossene Socken über die Befestigungsarme (108, 208) des drehbaren Befestigungselements (104, 204) gesteckt werden.

5. Der verstellbare tragbare Gerätehalter (100, 200) nach Anspruch 1 oder 2, wobei über den Befestigungsarmen (108, 208) des drehbaren Befestigungselements (104, 204) eine spritzgegossene Schürze montiert ist und spritzgegossene Socken über die Befestigungsarme gesteckt werden und die Schürze an ihrem Platz halten.

6. Der verstellbare tragbare Gerätehalter (100, 200) nach Anspruch 1 oder 2, wobei das drehbare Befestigungselement (104, 204) einem tragbaren elektronischen Gerät, das innerhalb des verstellbaren Klemmelements (102, 202) befestigt ist, ermöglicht, im Uhrzeigersinn oder gegen den Uhrzeigersinn in eine Hoch- und eine Querrichtung gedreht zu werden, während das drehbare Befestigungselement (104), 204) an einem Lüftungsflügel einer Fahrzeugklimaanlage befestigt ist.

7. Der verstellbare tragbare Gerätehalter (100, 200) nach Anspruch 1 oder 2, wobei die Befestigungsarme (108, 208) mehrere Befestigungsschlitze (110, 112, 210, 212) festlegen, die einen ersten Befestigungsschlitz (110, 210) mit einem ersten Freiraum und einen zweiten Befestigungsschlitz (112, 212) mit einem zweiten Freiraum umfassen, wobei der erste Freiraum größer ist als der zweite Freiraum.

8. Der einstellbare tragbare Gerätehalter (100, 200) nach Anspruch 7, wobei das drehbare Befestigungselement (104, 204) gedreht werden kann, um den ersten Befestigungsschlitz (110, 210) mit dem ersten Freiraum in einer horizontalen, vertikalen oder diagonalen Ebene zu positionieren, zur Befestigung des ersten Montageschlitzes (110, 210) an größeren Lüftungslamellen von Fahrzeugklimaanlagen in einer horizontalen, vertikalen oder diagonalen Ebene; und
das drehbare Befestigungselement (104, 204) gedreht werden kann, um den zweiten Befestigungsschlitz (112, 212) mit dem zweiten Freiraum in einer horizontalen, vertikalen oder diagonalen Ebene zu positionieren zwecks Befestigung des zweiten Montageschlitzes (112, 212) an kleineren, horizontal, vertikal oder diagonal ausgerichteten Lüftungslamellen von Fahrzeugklimaanlagen.

9. Der verstellbare tragbare Gerätehalter (100, 200) nach Anspruch 1 oder 2, wobei das griffige Material aus einem Gummi, Polymermaterial oder anderem Kunststoff-, Metall-, Legierungs-, Gewebe-, Verbundwerkstoff besteht, der die Haftung, den Griff oder den Reibungskoeffizienten zwischen der Grifffläche der Befestigungsarme (108, 208) und einem zwischen den Befestigungsarmen (108, 208) befestigten Lüftungsflügel einer Kraftfahrzeugklimaanlage erhöht.

10. Der verstellbare tragbare Gerätehalter (100, 200) nach Anspruch 1 oder 2, wobei:
das einstellbare Klemmelement (102, 202) ein griffiges Material auf einer Oberfläche des einstellbaren Klemmelements (102, 202) aufweist, um eine Haftung, einen Griff oder einen Reibungskoeffizienten zwischen der Greifoberfläche des einstellbaren Klemmelements und einer Oberfläche einer tragbaren elektronischen Vorrichtung zu erhöhen, die innerhalb des einstellbaren Klemmelements (102, 202) befestigt ist; und
das griffige Material auf der Oberfläche des verstellbaren Spannelementes (102, 202) ein Gummi, Polymermaterial oder ein anderes Kunststoff-, Metall-, Legierung-, Gewebe- oder Verbundmaterial umfasst, das die Haftung, den Griff oder den Reibungskoeffizienten zwischen der Grifffläche der Befestigungsarme (108, 208) und einem zwischen den Befestigungsarmen (108, 208) befestigten Lüftungsflügel einer Kraftfahrzeugklimaanlage erhöht.

11. Der verstellbare tragbare Gerätehalter (100, 200) nach Anspruch 1 oder 2, wobei die Grundplatte (106, 206) des drehbaren Befestigungselements (104, 204) an einem Hauptkörper des verstellbaren Klemmelements (102, 202) befestigt ist;
wenn das verstellbare Klemmelement (102, 202) vollständig eingefahren ist, ist ein Teil des verstellbaren Klemmelements (102, 202), von dem sich ein Seitengriff erstreckt, mit einem Seitenteil des Hauptkörpers bündig; und
wenn das verstellbare Spannelement (102, 202) ausgefahren wird, ist der Teil des verstellbaren Spannelementes, aus dem der Seitengriff herausragt, nicht mehr mit dem Seitenteil des Hauptkörpers bündig.

12. Der verstellbare tragbare Gerätehalter (100, 200) nach Anspruch 11, wobei der Teil des verstellbaren Klemmelements, von dem der Seitengriff ausgeht, einen ausfahrbaren Arm aufweist.

13. Der verstellbare tragbare Gerätehalter (100, 200) nach Anspruch 12, weiter bestehend aus zwei Stangen, die in den ausfahrbaren Arm eingesetzt sind.

14. Der verstellbare tragbare Gerätehalter (100, 200) nach Anspruch 13, wobei:
wenn das verstellbare Spannelement (102, 202) vollständig eingefahren ist, sind die Stangen nicht freiliegend und damit nicht sichtbar; und
wenn das verstellbare Spannelement (102, 202) ausgefahren ist, gibt es einen Spalt zwischen dem Hauptkörper und dem verstellbaren Arm des verstellbaren Spannelementes, wobei die Stangen frei liegen und somit im Spalt sichtbar sind.

15. Der verstellbare tragbare Gerätehalter (100, 200) nach Anspruch 1,
wobei das verstellbare Klemmelement (102, 202) so konfiguriert ist, dass es nur an zwei von vier peripheren Seiten eines tragbaren elektronischen Geräts ansetzt, das innerhalb des verstellbaren Klemmelements (102, 202) befestigt ist; und
wobei zu den tragbaren elektronischen Geräten unterschiedlicher Größe, die innerhalb des verstellbaren Klemmelements (102, 202) des verstellbaren Gerätehalters (100, 200) befestigt werden können, auch Smartphones unterschiedlicher Größe gehören.

## Revendications

1. Support réglable pour dispositif portable (100, 200) comprenant :
un élément de serrage réglable (102, 202) qui peut être agrandi et rétréci afin de maintenir des dispositifs électroniques portables de différentes tailles sur le support réglable pour dispositif portable (100, 200) ;
l'élément de serrage réglable comportant un ressort de compression ou de torsion qui facilite l'agrandissement et le rétrécissement de l'élément de serrage réglable (102, 202) en appliquant ou en libérant une force sur une surface de l'élément de serrage réglable (102, 202) ;
un élément de montage rotatif (104, 204) fixé sur l'élément de serrage réglable (102, 202), **caractérisé en ce que** :
l'élément de montage rotatif (104, 204) comprenant une plaque de base (106, 206) et une pluralité de bras de montage (108, 208) qui s'étendent à partir de la plaque de base (106, 206) ;
la plaque de base (106, 206) fournissant une plateforme tournante à partir de laquelle s'étendent les bras de montage (108, 208) ;
les bras de montage (108, 208) étant espacés les uns des autres d'une certaine distance et s'étendant à partir de la plaque de base (106, 206) en formant un angle par rapport à la plaque de base (106, 206), et définissant une fente de montage (110, 112, 210, 212) entre les bras de montage (108, 208) ;
la fente de montage (110, 112, 210, 212) entre les bras de montage (108, 208) étant configurée pour s'engager dans, et se fixer sur une lame de la bouche d'aération de la climatisation d'une automobile afin de monter le support réglable pour dispositif portable (100, 200) ; et
les bras de montage de l'élément de montage rotatif (104, 204) comprenant un matériau anti-glissant sur une surface anti-glissante des bras de montage afin d'augmenter l'adhérence, la prise ou un coefficient de frottement entre la surface anti-glissante des bras de montage (108, 208) et une lame de la bouche d'aération de la climatisation d'une automobile fixée à l'intérieur de la fente de montage (110, 112, 210, 212) entre les bras de montage (108, 208).

2. Support réglable pour dispositif portable (100, 200) selon la revendication 1, dans lequel l'élément de montage rotatif (104, 204) formé en tout ou en partie dans un feuillet en métal, en alliage ou en plastique afin de former la plaque de base (106, 206) avec des bras qui s'étendent à partir de la plaque de base, en étant espacés les uns des autres d'une certaine distance et qui sont recourbés en formant un angle par rapport à la plaque de base pour former les bras de montage (108, 208) ;

3. Support réglable pour dispositif portable (100, 200) selon la revendication 1 ou 2, dans lequel la plaque de base (106, 206) comprend un disque ou tout autre élément ayant une forme cylindrique qui peut tourner dans le sens des aiguilles d'une montre ou dans le sens contraire des aiguilles d'une montre ; et comprenant en outre une vis, un rochet, une broche ou une tige qui fixe l'élément de montage rotatif (104, 204) sur l'élément de serrage réglable (102, 202) et qui permet à l'élément de montage rotatif (104, 204) de tourner.

4. Support réglable pour dispositif portable (100, 200) selon la revendication 1 ou 2, dans lequel des bonnettes moulées par injection sont insérées sur les bras de montage (108, 208) de l'élément de montage rotatif (104, 204).

5. Support réglable pour dispositif portable (100, 200) selon la revendication 1 ou 2, dans lequel une jupe moulée par injection est assemblée sur les bras de montage (108, 208) de l'élément de montage rotatif (104, 204), et des bonnettes moulées par injection sont insérées sur les bras de montage et maintiennent la jupe en place.

6. Support réglable pour dispositif portable (100, 200) selon la revendication 1 ou 2, dans lequel l'élément de montage rotatif (104, 204) permet qu'un dispositif électronique portable qui est fixé à l'intérieur de l'élément de serrage réglable (102, 202) tourne dans le sens des aiguilles d'une montre ou dans le sens contraire des aiguilles d'une montre suivant une orientation de portrait ou une orientation de paysage alors que l'élément de montage rotatif (104, 204) est fixé sur une lame de la bouche d'aération de la climatisation d'une automobile.

7. Support réglable pour dispositif portable (100, 200) selon la revendication 1 ou 2, dans lequel les bras de montage (108, 208) définissent de multiples fentes de montage (110, 112, 210, 212) comprenant une première fente de montage (110, 210) présentant un premier dégagement et une seconde fente de montage (112, 212) présentant un second dégagement, dans lequel le premier dégagement est plus important que le second dégagement.

8. Support réglable pour dispositif portable (100, 200) selon la revendication 7, dans lequel :
l'élément de montage rotatif (104, 204) peut tourner pour positionner la première fente de montage (110, 210) présentant le premier dégagement dans un plan horizontal, vertical ou diagonal, afin de fixer la première fente de montage (110, 210) sur des lames plus grandes de la bouche d'aération de la climatisation d'une automobile orientées dans un plan horizontal, vertical ou diagonal ; et
l'élément de montage rotatif (104, 204) peut tourner pour positionner la seconde fente de montage (112, 212) présentant le second dégagement dans un plan horizontal, vertical ou diagonal afin de fixer la seconde fente de montage (112, 212) sur des lames plus petites de bouche d'aération de la climatisation d'une automobile dans un plan horizontal, vertical ou diagonal.

9. Support réglable pour dispositif portable (100, 200) selon la revendication 1 ou 2, dans lequel le matériau anti-glissant comprend un caoutchouc, un matériau polymère ou tout autre plastique, métal, alliage, tissu ou matériau composite qui augmente l'adhérence, la prise ou un coefficient de frottement entre la surface anti-glissante des bras de montage (108, 208) et une lame de la bouche d'aération de la climatisation d'une automobile fixée entre les bras de montage (108, 208).

10. Support réglable pour dispositif portable (100, 200) selon la revendication 1 ou 2, dans lequel :
l'élément de serrage réglable (102, 202) comprend un matériau anti-glissant sur une surface de l'élément de serrage réglable (102, 202) afin d'augmenter l'adhérence, la prise ou un coefficient de frottement entre la surface anti-glissante de l'élément de serrage réglable et une surface d'un dispositif électronique portable fixé à l'intérieur de l'élément de serrage réglable (102, 202) ; et
le matériau anti-glissant sur la surface de l'élément de serrage réglable (102, 202) comprend un caoutchouc, un matériau polymère ou tout autre plastique, métal, alliage, tissu ou matériau composite qui augmente l'adhérence, la prise ou un coefficient de frottement entre la surface anti-glissante des bras de montage (108, 208) et une lame de la bouche d'aération de la climatisation d'une automobile fixée entre les bras de montage (108, 208).

11. Support réglable pour dispositif portable (100, 200) selon la revendication 1 ou 2, dans lequel :
la plaque de base (106, 206) de l'élément de montage rotatif (104, 204) est fixée à un corps principal de l'élément de serrage réglable (102, 202) ;
lorsque l'élément de serrage réglable (102, 202) est rétréci au maximum, une partie de l'élément de serrage réglable (102, 202) à partir duquel s'étend une prise latérale se trouve au même niveau qu'une partie latérale du corps principal ; et
lorsque l'élément de serrage réglable (102, 202) est agrandi, la partie de élément de serrage réglable à partir duquel s'étend la prise latérale ne se trouve plus au même niveau que la partie latérale du corps principal.

12. Support réglable pour dispositif portable (100, 200) selon la revendication 11, dans lequel la partie de l'élément de serrage réglable à partir de laquelle s'étend la prise latérale comprend un bras extensible.

13. Support réglable pour dispositif portable (100, 200) selon la revendication 12, comprenant en outre deux tiges insérées dans le bras extensible.

14. Support réglable pour dispositif portable (100, 200) selon la revendication 13, dans lequel :
lorsque l'élément de serrage réglable (102, 202) est rétréci au maximum, les tiges ne sont pas exposées et ne sont donc pas visibles ; et
lorsque l'élément de serrage réglable (102, 202) est agrandi, un espace est créé entre le corps principal et le bras réglable de l'élément de serrage réglable, les tiges étant exposées et par conséquent visibles à l'intérieur de l'espace.

15. Support réglable pour dispositif portable (100, 200) selon la revendication 1, dans lequel :
l'élément de serrage réglable (102, 202) est configuré pour ne s'engager que sur deux des quatre côtés périphériques d'un dispositif électronique portable qui est fixé à l'intérieur de l'élément de serrage réglable (102, 202) ; et
dans lequel les dispositifs électroniques portables de différentes tailles qui peuvent être fixés à l'intérieur de l'élément de serrage réglable (102, 202) du support réglable pour dispositif portable (100, 200) comprennent des smartphones de différentes tailles.
